# EUROPÄISCHE PATENTSCHRIFT

(11) **EP 3 409 437 B1**
(45) Veröffentlichungstag und Bekanntmachung des Hinweises auf die Patenterteilung: **20.09.2023**
(21) Anmeldenummer: 18174357.6
(22) Anmeldetag: 25.05.2018
(51) Int. Cl.: B29C 37/00, B29C 71/00, C08J 7/12

(54) **ANLAGE ZUR KONTINUIERLICHEN BEHANDLUNG EINES STRANGPROFILS**
INSTALLATION FOR THE CONTINUOUS TREATMENT OF AN EXTRUDED PROFILE
INSTALLATION DE TRAITEMENT CONTINU D'UN PROFILÉ FILÉ

(30) Priorität: 01.06.2017 DE 102017112161
(43) Veröffentlichungstag der Anmeldung: 05.12.2018
(73) Patentinhaber: Fluor Technik System GmbH, 36341 Lauterbach (DE)
(72) Erfinder: Möller, Bernd, 36341 Lauterbach (DE)
(74) Vertreter: Rauch, Udo

(56) Entgegenhaltungen:
- DE-A1- 2 838 524
- DE-A1- 4 323 790
- US-A- 3 624 806
- US-A- 4 743 419

## Beschreibung

Die Erfindung bezieht sich auf eine Anlage zur kontinuierlichen Behandlung der Oberfläche eines aus einem Kunststoff bestehenden Strangprofils in einer mit einem Gas flutbaren Behandlungskammer, die einen Eingang zum Einführen des Profilstranges in die Behandlungskammer und einen Ausgang zum Ausführen des behandelten Strangprofils aus der Behandlungskammer aufweist.

Eine derartige Anlage, die zur Fluorierung von Kunststoffbahnen genutzt wird, wird in der EP 0214 635 A2 beschrieben. Mit einer Fluorierung werden die Oberflächenmoleküle eines Kunststoffsubstrats aktiviert, so dass eine Beschichtung des Substrats - z. B. ein Lack - besser auf seiner Oberfläche haftet. Zur Fluorierung wird in die Behandlungskammer ein Gas eingeleitet, das im Wesentlichen aus Stickstoff mit Anteilen von Sauerstoff und einem noch kleineren Anteil von Fluor besteht. Dabei besteht das generelle Problem, dass Fluor sehr reaktiv und sehr giftig ist, so dass die Anlage so eingerichtet sein muss, dass bei ihrem Betrieb möglichst kein oder allenfalls nur Spuren von Fluor in die Umgebung austritt.

Daher ist gemäß der EP 0 214 635 A2 vorgesehen, dass sich vor und hinter der Behandlungskammer jeweils eine Schleuse befindet, die mit einem Inertgas geflutet wird. Außerdem sind im Eingang und Ausgang der Behandlungskammer jeweils zwei Walzen vorgesehen, die beidseitig dicht an der Bahn anliegen.

Diese Anordnung hat den Nachteil, dass sie nur für flache, bahnförmige Substrate eingesetzt werden kann. Es besteht aber die Notwendigkeit, die Behandlungskammer auch bei unregelmäßig geformten Profilsträngen abzudichten.

Aus der DE 10 2008 002 393 A1 ist eine ähnliche Anlage zur Behandlung von unregelmäßig geformten Profilsträngen bekannt. Demnach befindet sich im Ein- und Ausgang der Behandlungskammer jeweils ein Siphon, der mit einer Flüssigkeit gefüllt ist, die als Gasbarriere dient. Außerdem ist vor dem Eingangssiphon und hinter dem Ausgangssiphon jeweils ein Abzug vorgesehen, der mit einer Abgasreinigung verbunden ist, so dass Fluor, der durch die Siphons nach außen tritt, abgesaugt und in der Abgasreinigung gebunden werden kann.

Nachteilig bei dieser Anordnung ist es, dass der Profilstrang, damit er durch die Siphons laufen kann, mehrmals gebogen werden muss. Außerdem muss der Flüssigkeitsstand in den Siphons laufend überprüft werden, da bei einem nicht ausreichenden Flüssigkeitsstand in den Siphons Fluor in einer Menge aus der Behandlungskammer entweichen würde, die nicht sofort über die Auslässe abgezogen werden kann, und damit in die Umgebung gelangt.

Die DE 28 38 524 A1 sieht verformbare Dichtringe aus einem elastomeren Kunststoff vor, deren Dichtlippen sich elastisch gegen das Strangprofil drücken.

Die DE 43 23 790 A1 beschreibt die Verwendung von Schlauchprofilen, die sich ebenfalls elastisch gegen das Strangprofil drücken.

Die US 3 624 806 A offenbart einen Ofen zum Behandeln von Gewebebahnen, die durch diesen gezogen werden. Dazu besitzt der Ofen eine Öffnung, die von zwei Platten gebildet wird, zwischen denen ein Schlitz ausgebildet ist.

Die Erfindung beruht somit auf dem Problem, einen unregelmäßig geformten Profilstrang möglichst kontinuierlich und knickfrei durch eine mit einem Gas geflutete Behandlungskammer zu leiten, und dabei den Profilstrang mit einfachen Mitteln so zu dichten, dass kein oder nur wenig Gas die Behandlungskammer verlassen kann.

Zur Lösung des Problems sieht die Erfindung vor, dass sowohl der Eingang als auch der Ausgang jeweils aus mindestens einer auswechselbaren Trennscheibe mit einer Öffnung für das zu behandelnde Strangprofil besteht, wobei der Querschnitt der Öffnung dem Querschnitt des Strangprofils deckungsgleich entspricht, wozu die Trennscheiben aus einem Satz Trennscheiben ausgewählt sind, wobei die Querschnittsform der Öffnung und die des zu behandelnden Strangprofils soweit übereinstimmen, dass der Rand der Trennscheibenöffnung möglichst nahe an den Umfang des Strangprofils heranreicht oder daran druckfrei anliegt. Die Trennscheiben sind gasdicht in Aufnahmen aufgenommen. Ferner sind die Trennscheiben mittels eines Bajonettverschlusses in den Aufnahmen gehalten. Deckungsgleich bedeutet in diesem Zusammenhang, dass die Querschnittsform der Öffnung und die des Strangprofils soweit übereinstimmen, dass der Rand der Trennscheibenöffnung möglichst nahe an den Umfang des Strangprofils heranreicht oder daran druckfrei anliegt, ohne dass zu hohe Reibungskräfte entstehen, die den Durchzug des Strangprofils durch die Anlage behindern würden.

Mit einer solchen Anlage kann eine Vielzahl von unterschiedlichen Querschnitten behandelt werden. Dazu wird jeweils eine passende Trennscheibe eingesetzt, deren Öffnung möglichst vollständig von dem Querschnitt des zu behandelnden Strangprofils ausgefüllt wird.

Trotz allem wird nicht zu vermeiden sein, dass durch den Spalt zwischen dem Strangprofil und dem Rand der Öffnung Fluor aus der Behandlungskammer austritt.

Die Erfindung sieht daher weiterhin vor, dass der Eingang und/oder der Ausgang jeweils zwei auswechselbare Trennscheiben aufweist, die zwischen sich eine Schleusenkammer einer Eingangsschleuse und einer Ausgangsschleuse einschließen, die mit einem Absorber verbunden ist.

Gas, was durch die innere Trennscheibe in die Schleusenkammer eintritt, wird durch die äußere Trennscheibe am weiteren Austritt in die Umgebung gehindert und zu einem Absorber abgesogen, der das Fluor bindet. Allenfalls minimalste Reste von Fluor können durch die jeweils äußeren Trennscheiben in die Umgebung austreten.

Um die Trennscheiben auswechseln zu können, sind sie in Aufnahmen gasdicht aufgenommen, wobei die Aufnahmen selbst gasdicht in der Anlage angeordnet sind. Somit kann Gas allenfalls durch die Öffnungen in der Trennscheibe entweichen.

Um ein Austauschen der Trennscheiben zu erleichtert, sind die Trennscheiben mittels eines Bajonettverschlusses in den Aufnahmen gehalten.

Zur Lösung des Bajonettverschlusses werden die Trennscheibe und Ihre Mittelachse gedreht und dann der Aufnahme entnommen. Anschließend wird eine neue Trennscheibe in die Aufnahme eingesetzt und durch eine gegensinnige Drehung darin fixiert.

Vorzugsweise sind die Aufnahmen in gegenüberliegenden Enden der Schleuse ausgebildet. Die Schleusen werden an die Behandlungskammer angeflanscht. Zum Auswechseln der Trennscheiben werden diese Flansche gelöst, so dass die Schleusen entnommen werden können. Dadurch ist ein Zugriff zu den Trennscheiben, die sich in den Enden der Schleusenkammer befinden, möglich.

Um noch eine bessere Abdichtung der Behandlungskammer zu gewährleisten und einen noch größeren Anteil von Fluor aus dem aus der Behandlungskammer entwichenen Gas abzutrennen, ist vorgesehen, dass zumindest bei einer Schleuse zwischen den Trennscheiben an den Enden der Schleuse eine weitere Trennscheibe angeordnet ist, wodurch die Schleuse in zwei Zonen aufgeteilt ist, die jeweils einen Anschluss an einen Absorber haben.

Die Schleusen stellen damit eine Art Kaskade dar. Der größte Teil des Fluors wird in der an die Behandlungskammer anschließende Zone abgesogen, ein kleiner Rest des Fluors, der durch die weitere Trennscheibe in die Zone, die weiter von der Behandlungskammer entfernt ist, eintritt, wird über den weiteren Absorber abgesogen.

Damit die weitere Trennscheibe zwischen den beiden äußeren Trennscheiben für einen Austausch erreicht werden kann, hat sie einen etwas kleineren Durchmesser als die äußeren Trennscheiben, so dass sie durch die Aufnahmen für die äußeren Trennscheiben in die Schleusenkammer zu einer Aufnahme zwischen den beiden Zonen geführt werden kann.

Um eine gleichmäßige Aktivierung des durch die Behandlungskammer fahrenden Profilstranges zu erreichen, ist vorgesehen, dass die Behandlungskammer einen Gaseinlass in Nähe des Ausganges und einen Gasauslass in der Nähe des Einganges aufweist, so dass die Behandlungskammer gegen die Bewegungsrichtung des Profilstranges vom Gas durchflutet wird.

Frisches Gas mit einer höheren Konzentration an Fluor tritt somit am Ausgangsende der Behandlungskammer ein und ist daher in der Lage, die teilweise schon aktivierte Oberfläche weiter zu aktivieren. Am Eingang der Behandlungskammer reicht eine geringere Fluorgaskonzentration aus, da hier die Oberfläche noch nicht aktiviert ist und somit bereitwillig eine Aktivierung auch bei einer geringeren Fluorkonzentration zulässt.

Die Umwälzung erfolgt mit einer Umwälzpumpe, die in einem Bypasskanal zwischen dem Gaseinlass und dem Gasauslass angeordnet ist.

Im oder am Bypasskanal befindet sich auch ein Spektrometer, das laufend die Fluorgaskonzentration überwacht. Damit können dem Bypasskanal die Gase der Behandlungsatmosphäre, nämlich im Wesentlichen Stickstoff, Sauerstoff und Fluor, dosiert zugeleitet werden.

Wie schon zuvor erwähnt, werden die Schleusenkammern von der Behandlungskammer entfernt, um die Trennscheiben auswechseln zu können. Dadurch wird die Behandlungskammer geöffnet. Um zuvor das Fluor aufweisende Gasgemisch daraus zu entfernen, ist an die Behandlungskammer eine Absaugkammer angeschlossen, die ebenfalls über einen Absorberanschluss verfügt, um das Fluor aus dem abgesaugten Gas entfernen zu können.

Die Länge der Behandlungskammer, also der Abstand zwischen den Trennscheiben am Ein- und Ausgang, wird bestimmt von der benötigten Dauer der Fluoreinwirkung.

Um bei einem großen Abstand den Trennscheiben am Ein- und Ausgang ein Durchhängen des Strangprofils in der Behandlungskammer zu vermeiden, können dort Laufstützen, z. B. in Form von Rollen, angeordnet werden.

Im Folgenden soll anhand eines Ausführungsbeispiels die Erfindung näher erläutert werden. Dazu zeigt:
- Fig. 1: einen Längsschnitt durch eine Anlage und
- Fig. 2: eine Draufsicht auf eine Trennscheibe
- Fig. 3: den Querschnitt einer Aufnahme mit einer Trennscheibe.

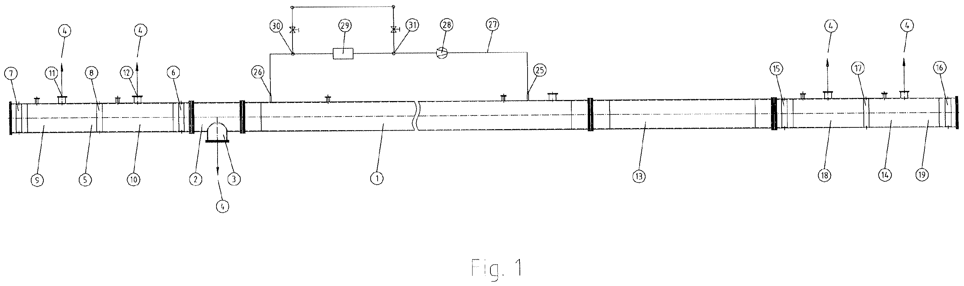

Die Anlage gemäß der Fig. 1 besteht aus mehreren Rohrabschnitten, die jeweils verschiedene Funktionen übernehmen.

Das mittlere Rohr bildet die Behandlungskammer 1, die an ihrem einen Ende in ein Zwischenrohr 2 übergeht, an dem sich ein Abzweig 3 zu einem Absorber 4 befindet. Davor liegt eine rohrförmige Eingangsschleuse 5 mit einer kammernahen, inneren Trennscheibe 6, einer kammerfernen, äußeren Trennscheibe 7 und einer dazwischenliegenden Zwischentrennscheibe 8. Auf diese Weise sind zwei Schleusenzonen 9 und 10 ausgebildet, die je über einen Außenanschluss 11, 12 mit einem Absorber verbunden sind.

Auf der anderen Seite der Behandlungskammer, der Ausgangsseite, schließt sich ein optionales Verlängerungsrohr 13 an, das die Behandlungskammer verlängert und an das sich wiederum eine rohrförmige Ausgangsschleuse 14 anschließt. Diese Schleuse 14 ist mit einer kammernahen, inneren Trennscheibe 15, einer kammerfernen, äußeren Trennscheibe 16 und einer Zwischentrennscheibe 17 ausgestattet, so dass Schleusenzonen 18, 19 gebildet sind, die über je einen Absorber 4 verfügen. Bei den zuvor erwähnten Absorbern kann es sich um einen einzelnen, für alle Absorberanschlüsse gemeinsamen Absorber handeln oder aber auch um einzelne, unabhängig voneinander arbeitende Absorber.

Die zuvor erwähnten Abschnitte der Anlage, also die Behandlungskammer 1, das Zwischenrohr 2, die Eingangsschleuse 5, das Verlängerungsrohr 13 und die Ausgangsschleuse 14 besitzen jeweils Flansche, mit denen sie zu einer durchgehenden linearen Strecke verbunden sind, die der Profilstrang knickfrei und kontinuierlich durchlaufen kann.

Die Behandlungskammer 1 selbst verfügt über einen Gaseinlass 25 am Ausgangsende und einem Gasauslass 26 am Einlassende, die über einen Bypasskanal 27 miteinander verbunden sind. In diesem Kanal befindet sich eine Umwälzpumpe 28, so dass das am Gaseinlass eintretende Gas in Gegenrichtung zur Bewegung des Profilstranges zum Gasauslass 26 gepumpt wird. Stromaufwärts zur Umwälzpumpe befindet sich in dem Bypasskanal 27 ein Spektrometer 29, mit dessen Hilfe der Fluoranteil im Gas bestimmt wird.

Vor und hinter dem Spektrometer 29 befinden sich Gaseinlässe 30, 31, über die mit Hilfe gesteuerter Ventile Gase eingelassen werden können, so dass das umgewälzte Gas einen Anteil von 1% Fluor hat, wobei die Restgasmenge sich zu 80% auf Stickstoff und zu 20% auf Sauerstoff verteilt.

Die Trennscheiben 6, 7, 8; 15, 16 und 17 sind aus Teflon und besitzen eine zentrale Öffnung 33, deren Querschnitt dem Querschnitt des zu behandelnden Strangprofils entspricht. Je nachdem, welche Art von Strangprofil daher in der Behandlungskammer behandelt werden soll, sind entsprechende Trennscheiben aus einem Satz Trennscheiben auszuwählen.

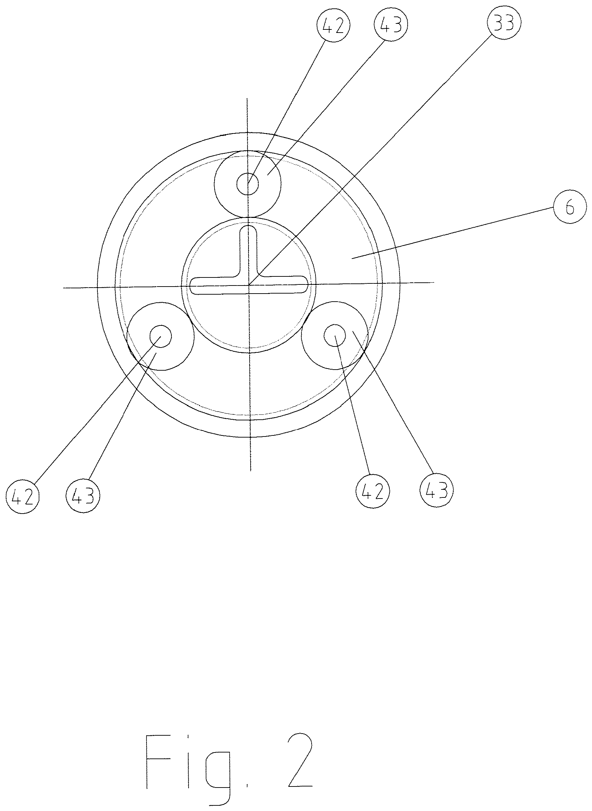

In der Fig. 2 ist beispielhaft eine T-förmige Öffnung 33 dargestellt, die für ein T-förmiges Strangprofil geeignet ist.

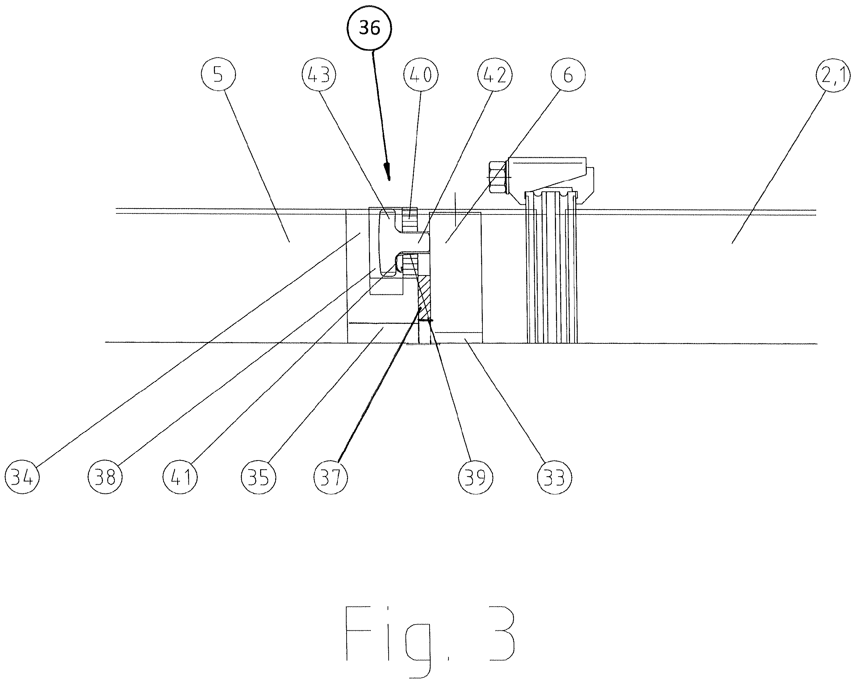

In den Schleusenkammern der Eingangsschleuse 5 und der Ausgangsschleuse 14 befinden sich ringförmige Aufnahmen 34, die mit ihrem Außenrand gasdicht mit der inneren Mantelfläche der Schleusen verbunden sind. Im Folgenden wird dies in der Fig. 3 am Beispiel der kammernahen Trennscheibe 6 in der Eingangsschleuse 5 näher erläutert:
Vor dem offenen Zentrum 35 der ringförmigen Aufnahmen 34 wird die Trennscheibe 6 gasdicht aufgenommen und mittels eines Bajonettverschlusses 36 fixiert.

Die Gasdichtigkeit wird erreicht, in dem die Trennscheibe 6 gegen einen elastisch nachgiebigen Dichtungsring 37 der Aufnahme 34 angelegt ist. Die Elastizität des Dichtungsringes 37 sorgt dafür, dass ein Druck auf den geschlossen Bajonettverschluss 36 ausgeübt wird, damit dieser sich nicht unbeabsichtigt löst.

Wie der Fig. 3 zu entnehmen ist, besitzt zur Ausbildung des Bajonettverschlusses 36 die Aufnahme 34 in ihrer der Trennscheibe 6 zugewandten Seite wenigstens drei umlaufende Nuten 38, von denen eine dargestellt ist und die bis auf ein Eingangsloch 39 von Stegen 40, die einen Schlitz 41 formen, abdeckt sind, so dass Hinterschnitte gebildet sind. In jedes Loch 39 taucht unter Zusammendrückung des Dichtungsringes 37 ein zugehöriger Pilz 42 an der Trennscheibe ein, dessen Kopf 43 hinter die Stege 40 gelangt, wenn die Trennscheibe 8 um ihre Mittelachse gedreht wird. Die Pilze 42, die die Stege 40 in den Nuten 37 hintergreifen, halten somit die Trennscheibe 8 gasdicht an der Aufnahme 34.

**Bezugszeichenliste**

| | | | |
|---|---|---|---|
| 1 | Behandlungskammer | 26 | Gasauslass |
| 2 | Zwischenrohr | 27 | Bypasskanal |
| 3 | Abzweig | 28 | Umwälzpumpe |
| 4 | Absorber | 29 | Spektrometer |
| 5 | Eingangsschleuse | 30 | Gaseinlass |
| 6 | kammernahe Trennscheibe | 31 | Gaseinlass |
| 7 | kammerferne Trennscheibe | 32 | |
| 8 | Zwischentrennscheibe | 33 | Öffnung |
| 9 | Schleusenzone | 34 | ringförmige Aufnahmen |
| 10 | Schleusenzone | 35 | offenes Zentrum |
| 11 | Außenanschluss | 36 | Bajonettverschluss |
| 12 | Außenanschluss | 37 | Dichtungsring |
| 13 | Verlängerungsrohr | 38 | Nuten |
| 14 | Ausgangsschleuse | 39 | Eingangsloch |
| 15 | kammernahe Trennscheibe | 40 | Stege |
| 16 | kammerferne Trennscheibe | 41 | Schlitz |
| 17 | Zwischentrennscheibe | 42 | Pilz |
| 18 | Schleusenzone | 43 | Kopf |
| 19 | Schleusenzone | | |
| 25 | Gaseinlass | | |

## Patentansprüche

1. Anlage zur kontinuierlichen Behandlung der Oberfläche eines aus einem Kunststoff bestehenden Strangprofils in einer mit einem Gas flutbaren Behandlungskammer (1), die einen Eingang zum Einführen des Profilstranges in die Behandlungskammer (1) und einen Ausgang zum Ausführen des behandelten Strangprofils aus der Behandlungskammer (1) aufweist, **dadurch gekennzeichnet, dass** sowohl der Eingang als auch der Ausgang jeweils aus mindestens einer auswechselbaren Trennscheibe (6, 15) mit einer Öffnung (33) für das zu behandelnde Strangprofil besteht, wobei der Querschnitt der Öffnung (33) dem Querschnitt des Strangprofils deckungsgleich entspricht, wobei die Trennscheiben (6, 7; 15, 16) in Aufnahmen (34) gasdicht aufgenommen sind, und
die Trennscheiben (6, 7,15, 16) mittels eines Bajonettverschlusses (36) in den Aufnahmen (34) gehalten sind..

2. Anlage nach Anspruch 1, **dadurch gekennzeichnet, dass** der Eingang und/oder der Ausgang jeweils zwei auswechselbare Trennscheiben (6, 7; 15, 16) aufweist, die zwischen sich jeweils eine Schleusenkammer einer Eingangsschleuse (5) und einer Ausgangsschleuse (14) einschließen, die mit einem Absorber (4) verbunden ist.

3. Anlage nach Anspruch 1 oder 2, **dadurch gekennzeichnet, dass** die Aufnahmen (34) gasdicht in der Anlage angeordnet sind.

4. Anlage nach einem der vorhergehenden Ansprüche, **dadurch gekennzeichnet, dass** die Aufnahmen (34) in gegenüberliegenden Enden der Schleusen (5, 14) ausgebildet sind.

5. Anlage nach Anspruch 4, **dadurch gekennzeichnet, dass** zumindest eine der Schleusen (5, 14) eine weitere Trennscheibe (8, 17) aufweist, die zwischen den Trennscheiben (6, 7,15, 16) an den Enden der Schleuse (5, 14) angeordnet ist, wodurch die Schleuse in zwei Zonen (9, 10; 18, 19) aufgeteilt ist, die jeweils einen Anschluss an einen Absorber (4) haben.

6. Anlage nach einem der vorhergehenden Ansprüche, **dadurch gekennzeichnet, dass** die Behandlungskammer (1) einen Gaseinlass (25) in der Nähe des Ausganges und einen Gasauslass (26) in der Nähe des Einganges aufweist, so dass die Behandlungskammer (1) gegen die Bewegungsrichtung des Profilstranges von dem Gas durchflutet wird.

7. Anlage nach Anspruch 6, **dadurch gekennzeichnet, dass** eine Umwälzpumpe (28) in einem Bypasskanal (27) zwischen dem Gaseinlass (25) und dem Gasauslass (26) angeordnet ist.

8. Anlage nach Anspruch 7, **dadurch gekennzeichnet, dass** im oder am Bypasskanal (27) ein Spektrometer (29) angeordnet ist.

9. Anlage nach einem der vorhergehenden Ansprüche, **dadurch gekennzeichnet, dass** an die Behandlungskammer (1) eine Absaugkammer angeschlossen ist, die über einen Absorberanschluss verfügt.

10. Anlage nach einem der vorhergehenden Ansprüche, **dadurch gekennzeichnet, dass** Laufstützen für den Profilstrang in der Behandlungskammer (1) angeordnet sind.

## Claims

1. Facility for the continuous treatment of the surface of a strand profile consisting of a plastic material in a treatment chamber (1) which can be flooded with a gas and which has an inlet for introducing the strand profile into the treatment chamber (1) and an outlet for removing the treated strand profile from the treatment chamber (1), **characterised in that** both the inlet and the outlet each consist of at least one replaceable separating disc (6, 15) with an opening (33) for the strand profile to be treated, the cross-section of the opening (33) corresponding congruently to the cross-section of the strand profile, wherein
the separating discs (6, 7; 15, 16) are contained in receptacles (34) in a gas-tight manner, and
the cutting discs (6, 7, 15, 16) are held in the receptacles (34) by means of a bayonet catch (36).

2. Facility according to claim 1, **characterised in that** the inlet and/or the outlet each has two exchangeable separating discs (6, 7; 15, 16), which each enclose between them a lock chamber of an inlet lock (5) and an outlet lock (14), which is connected to an absorber (4).

3. Facility according to claim 1 or 2, **characterised in that** the receptacles (34) are arranged gas-tight in the system.

4. Facility according to any one of the preceding claims, **characterized in that** the receptacles (34) are formed in opposite ends of the locks (5, 14).

5. Facility according to claim 4, **characterized in that** at least one of the locks (5, 14) comprises a further separating disc (8, 17) arranged between the separating discs (6, 7, 15, 16) at the ends of the lock (5, 14), whereby the lock is divided into two zones (9, 10; 18, 19), each of which has a connection to an absorber (4).

6. Facility according to any one of the preceding claims,
**characterised in that** the treatment chamber (1) has a gas inlet (25) in the vicinity of the outlet and a gas outlet (26) in the vicinity of the inlet, so that the treatment chamber (1) is flooded by the gas against the direction of movement of the strand profile.

7. Facility according to claim 6, **characterised in that** a circulation pump (28) is arranged in a bypass channel (27) between the gas inlet (25) and the gas outlet (26).

8. Facility according to claim 7, **characterised in that** a spectrometer (29) is arranged in or on the bypass channel (27).

9. Facility according to one of the preceding claims, **characterised in that** an extraction chamber is connected to the treatment chamber (1) and has an absorber connection.

10. Facility according to any one of the preceding claims, **characterised in that** running supports for the strand profile are arranged in the treatment chamber (1).

## Revendications

1. Installation pour le traitement en continu de la surface d'un profilé filé en plastique dans une chambre de traitement (1) pouvant être inondée d'un gaz, qui présente une entrée pour l'introduction du profilé extrudé dans la chambre de traitement (1) et une sortie pour l'évacuation du profilé filé traité hors de la chambre de traitement (1), **caractérisé en ce qu'**aussi bien l'entrée que la sortie se composent chacune d'au moins un disque de séparation interchangeable (6, 15) avec une ouverture (33) pour le profilé filé à traiter, la section transversale de l'ouverture (33) correspondant à la section transversale du profilé filé en coïncidence, où
les disques de séparation (6, 7 ; 15, 16) sont logés dans des logements (34) de manière étanche aux gaz, et
les disques de séparation (6, 7, 15, 16) sont maintenus dans les logements (34) au moyen d'une fermeture baïonnette (36).

2. Installation selon la revendication 1, **caractérisée en ce que** l'entrée et/ou la sortie présentent respectivement deux disques de séparation interchangeables (6, 7 ; 15, 16) qui enferment entre eux respectivement une chambre de sas d'un sas d'entrée (5) et un sas de sortie (14) qui est relié à un absorbeur (4).

3. Installation selon la revendication 1 ou 2, **caractérisée en ce que** les logements (34) sont disposés de manière étanche aux gaz dans l'installation.

4. Installation selon l'une des revendications précédentes, **caractérisée en ce que** les logements (34) sont formées en extrémités opposées des sas (5, 14).

5. Installation selon la revendication 4, **caractérisée en ce qu'**au moins l'un des sas (5, 14) comporte un autre disque de séparation (8, 17) disposé entre les disques de séparation (6, 7, 15, 16) aux extrémités du sas (5, 14), le sas étant ainsi divisé en deux zones (9, 10 ; 18, 19) comportant chacune un raccordement à un absorbeur (4).

6. Installation selon l'une des revendications précédentes,
**caractérisé en ce que** la chambre de traitement (1) présente une entrée de gaz (25) à proximité de la sortie et une sortie de gaz (26) à proximité de l'entrée, de sorte que la chambre de traitement (1) est traversée par le gaz dans le sens opposé au sens de déplacement du profilé filé.

7. Installation selon la revendication 6, **caractérisée en ce qu'**une pompe de circulation (28) est disposée dans un canal de dérivation (27) entre l'entrée de gaz (25) et la sortie de gaz (26).

8. Installation selon la revendication 7, **caractérisée en ce qu'**un spectromètre (29) est disposé dans ou sur le canal de dérivation (27).

9. Installation selon l'une des revendications précédentes, **caractérisée en ce qu'**une chambre d'aspiration est raccordée à la chambre de traitement (1), laquelle dispose d'un raccordement d'absorbeur.

10. Installation selon l'une des revendications
précédentes,
**caractérisé en ce que** des supports de roulement pour le profilé filé sont disposé dans la chambre de traitement (1).
